# EUROPEAN PATENT SPECIFICATION

(11) **EP 4 243 118 B1**
(45) Date of publication and mention of the grant of the patent: **18.02.2026**
(21) Application number: 22858635.0
(22) Date of filing: 01.08.2022
(51) Int. Cl.: H01M 4/36, H01M 4/62, H01M 4/525, H01M 4/505, H01M 10/0562, H01M 10/052, H01M 4/02, H01M 4/131, H01M 4/1391

(54) **CATHODE ACTIVE MATERIAL COMPOSITE, SECONDARY BATTERY CATHODE COMPRISING SAME, AND SECONDARY BATTERY COMPRISING SAME**
KATHODENAKTIVMATERIALVERBUNDSTOFF, SEKUNDÄRBATTERIEKATHODE DAMIT UND SEKUNDÄRBATTERIE DAMIT
COMPOSITE DE MATÉRIAU ACTIF DE CATHODE, CATHODE DE BATTERIE SECONDAIRE LE COMPRENANT, ET BATTERIE SECONDAIRE LE COMPRENANT

(30) Priority: 17.08.2021 KR 20210108241; 27.07.2022 KR 20220092845
(43) Date of publication of application: 13.09.2023
(73) Proprietor: LG Energy Solution, Ltd., Seoul 07335 (KR)
(72) Inventor: KIM, Myeongsoo, Daejeon 34122 (KR); KIM, Ki Tae, Daejeon 34122 (KR); KIM, Taegon, Daejeon 34122 (KR)
(74) Representative: Goddar, Heinz J.
(86) International application number: PCT/KR2022/011335
(87) International publication number: WO 2023/022397

(56) References cited:
- WO-A1-2020/226448
- JP-A- 2016 189 339
- JP-A- 2020 194 708
- JP-A- H09 115 550
- KR-A- 20180 073 442
- KR-A- 20200 050 694
- US-A1- 2014 377 627
- US-A1- 2016 268 627
- US-A1- 2022 077 468

## Description

### [Technical Field]

This application claims the benefits of priorities based on Korean Patent Application No. 10-2021-0108241 filed on August 17, 2021 and Korean Patent Application No. 10-2022-0092845 filed on July 27, 2022

The present invention relates to a composite for a positive electrode active material, a positive electrode for a secondary battery comprising the same, and a secondary battery comprising the same.

### [Background Art]

Recently, there is gradually increasing interest in energy storage technology. As the application area thereof extends to the energy for mobile phones, camcorders, notebook PCs, and even electric vehicles, the effort of research and development of electrochemical devices is being carried out more and more concretely.

Electrochemical devices are the most noteworthy area in this respect, and among them, the development of a secondary battery capable of charging/discharging is the focus of attention. Recently, in developing secondary batteries, research and development for the design of new electrodes and batteries is being actively carried out in order to improve the capacity density and specific energy.

Currently, among secondary batteries that have been put into practical use, the lithium-ion battery is in the spotlight because of its advantages of higher operating voltage and significantly higher energy density compared to conventional batteries.

However, since the lithium-ion battery using a liquid electrolyte has a structure in which the negative electrode and the positive electrode are partitioned by a separator, if the separator is damaged by deformation or external impact, a short circuit may occur, which may lead to a risk of overheating or explosion. In order to solve the above-mentioned problems, the development of solid electrolyte materials using ion conductive polymers or inorganic materials and all-solid-state batteries using them are being made.

The lithium secondary battery using the solid electrolyte has advantages that the safety of the battery is increased, the leakage of electrolyte solution can be prevented, and thus the reliability of the battery is improved, and it is easy to manufacture a thin battery. These solid electrolytes can be largely divided into polymer electrolyte materials and inorganic solid electrolyte materials depending on the properties of the material. Using a solid electrolyte is known to be advantageous in terms of the performance of the battery, such as safety, high energy density, high output, and long life, and to be advantageous even in terms of simplification of the manufacturing process, enlargement/compactization of batteries, and cost reduction, and thus has recently attracted increasing interest.

The lithium-ion conductivity of the solid electrolyte is still lower than that of the liquid electrolyte, however, theoretically, since it has been reported that the ion conductivity in solid is higher than in liquid, the all-solid-state lithium ion battery is attracting attention from the viewpoint of charge/discharge rate and high output. When using a solid electrolyte, the active material and electrolyte must be in close contact in order to secure ion conductivity. Therefore, a technique for forming a close contact between an active material and an electrolyte by applying a high pressure when manufacturing an electrode is known.

However, in the case of simply applying high pressure as in the prior art, in many cases, the contact between the active material and the electrolyte is not sufficiently achieved by the high pressure, and since there is a concern that the electrode and/or solid electrolyte may be damaged by pressurization by high pressure, the development of a more efficient method is required.

Meanwhile, when a solid electrolyte is used, not only close contact between the active material and the electrolyte, but also close contact between the active material and the electrically conductive material is required.

However, at present, a method of manufacturing an electrode for an all-solid-state battery is mainly carried out by a method by simple mixing of components, and due to the limitations of this method, it is not possible to sufficiently lower the resistance of the electrode.

### [Prior Art Document]

Korean Laid-open Patent Publication No. 10-2015-0064697

### [Disclosure]

### [Technical Problem]

The present invention has been devised to solve the above problems of the prior art, and it is an object of the present invention to provide a composite for a positive electrode active material, which can provide excellent ion conductivity and electrical conductivity by forming a structure in which the positive electrode active material is in close contact with the solid electrolyte and electrically conductive material, and a positive electrode for a secondary battery comprising the same, and a secondary battery comprising the same.

### [Technical Solution]

In order to achieve the above object, the present invention provides a composite for a positive electrode active material, as defined in claim 1.

In addition, the present invention provides
a positive electrode for a secondary battery comprising the composite for the positive electrode active material.

In addition, the present invention provides
a secondary battery comprising the above positive electrode, a negative electrode, and a solid electrolyte.

### [Advantageous Effects]

The composite for the positive electrode active material of the present invention provides excellent ion conductivity and electrical conductivity by forming the coating layer up to the surface of the positive electrode active material and the inside of the pores thereof by the solid electrolyte and the electrically conductive material and thus forming a structure in which the positive electrode active material and the solid electrolyte and the electrically conductive material are in close contact.

In addition, the positive electrode for the secondary battery comprising the composite for the positive electrode active material provides excellent ion conductivity and electrical conductivity.

In addition, the secondary battery including the positive electrode provides improved battery capacity, improved charging and discharging characteristics and lifetime characteristics due to the improved performance of the positive electrode as described above.

### [Description of Drawings]

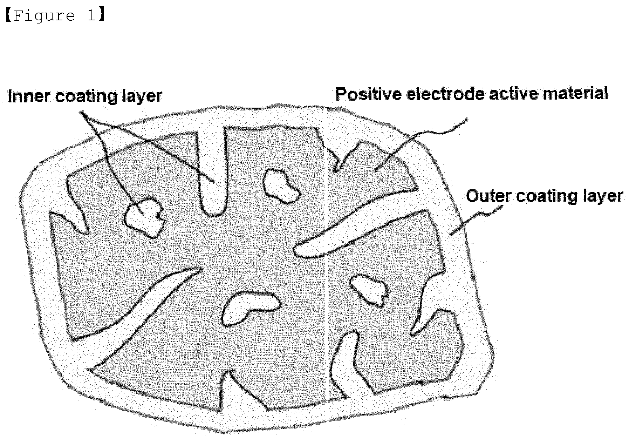

FIG. 1 is a view schematically showing the structure of the composite for the positive electrode active material of the present invention.

### [Best Mode]

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

The terminology used herein is for the purpose of describing particular embodiments only and is not intended to be limiting of the invention. The singular forms "a," "an," and "the" include plural referents unless the context clearly dictates otherwise.

It is to be understood that the terms "comprise" or "have" as used in the present specification, are intended to designate the presence of implemented features, numbers, steps, components, or combinations thereof, but not to preclude the possibility of the presence or addition of one or more other features, numbers, steps, components, or combinations thereof.

The composite for the positive electrode active material comprises a positive electrode active material; and a coating layer formed on the pores and the surface of the positive electrode active material, wherein the coating layer is a coating layer formed of a coating composition containing a powder of the electrically conductive material and a powder of a solid electrolyte having a particle diameter (D50) of 0.3 *µ*m to 2 *µ*m.

The coating layer may be a coating layer by dry coating. In the case of the conventional dry coating method, it is impossible to form a coating layer by dry coating with the same quality as in the present invention, but according to the present invention, it is possible to easily form a coating layer by dry coating having high quality.

In the case of the dry coating process, since it does not use a solvent, it does not require a mixing process, a heat treatment process, or a drying process, and thus it is possible to shorten the process, and also since side reactions and impurities do not occur, the effect of further lowering the surface resistance is provided. In addition, in the case of the wet process, it is difficult to form a coating layer in which the solid electrolyte and the electrically conductive material are uniformly mixed on the surface of the active material because the phase separation of the solid electrolyte and the electrically conductive material occurs when drying, and therefore, the electrical resistance is also increased. However, in the case of the dry coating process, it provides excellent properties in that it does not have these disadvantages.

The composite for the positive electrode active material of the present invention is characterized in that the pores and the surface of the positive electrode active material are coated with a coating composition containing the powder of the electrically conductive material and the powder of the solid electrolyte. By this coating, since the coating layer by the electrically conductive material and the solid electrolyte is formed up to the surface of the positive electrode active material and the inside (pore wall, bottom, internal pore, etc.) of the pores, it becomes possible to form close contact between the positive electrode active material and the solid electrolyte and the electrically conductive material, and thus the composite for the positive electrode active material has excellent ion conductivity and electrical conductivity.

The solid electrolyte has a particle diameter (D50) of 0.2 *µ*m to 2 *µ*m. The solid electrolyte may have a particle diameter (D50) of 0.3*µ*m or more, 0.5*µ*m or more, 0.7*µ*m or more, 0.9*µ*m or more, 1.0*µ*m or more, or 1.2*µ*m or more, and 1.8*µ*m or less, 1.6*µ*m or less, 1.4*µ*m or less, 1.2 *µ*m or less, 1.0*µ*m or less, 0.8*µ*m or less, 0.6*µ*m or less, or 0.4*µ*m or less.

As described above, when a powder of a solid electrolyte having a small particle diameter is used, the coating on the surface of the positive electrode active material can be made more uniformly, and in particular, since the inside of the pores contained in the positive electrode active material is coated with the solid electrolyte, the ion conductivity of the composite for the positive electrode active material can be greatly improved. However, if the particle diameter (D50) of the solid electrolyte is less than 0.2*µ*m, it is not preferable because the particles are scattered in the dry mixing process and it is difficult to work. If the particle diameter (D50) of the solid electrolyte exceeds 2*µ*m, it is not preferable because it is difficult to insert the powder of the solid electrolyte into the pores of the positive electrode active material.

The positive electrode active material contains pores having a diameter of 0.5 *µ*m to 3 *µ*m. If the positive electrode active material contains the pores having a diameter in the above range, it is preferable because the powder of the solid electrolyte and the powder of the electrically conductive material can easily penetrate into the pores, and thus can smoothly coat the walls of the pores and the bottom of the pores.

The particle diameter (D50) of the solid electrolyte is smaller than the pore size of the particles of the positive electrode active material. In addition, it may be more preferable when the ratio of the particle diameter (D50) of the solid electrolyte and the pore size of the particles of the positive electrode active material is 1: 4.5 to 2: 3, more preferably 1: 3 to 1: 2. If these conditions are satisfied, it is preferable because the particles of the solid electrolyte easily penetrate into the pores of the positive electrode active material, and thus the pore walls, pore bottoms, and the like can be smoothly coated.

In one embodiment of the present invention, as for the powder of the electrically conductive material for the positive electrode, components known in the art may be used without limitation, and for example, those having a particle diameter (D50) of 0.02 *µ*m to 2 *µ*m may be used. If a fiber-type powder satisfying the range of the particle diameter is used, the particle diameter (D50) means the length of the fiber powder.

The powder of the positive electrode electrically conductive material has a particle size that can be inserted into the pores of the positive electrode active material. In this case, a particle diameter (D50) of the powder of the positive electrode electrically conductive material may be 0.02 *µ*m to 2 *µ*m. The electrically conductive material may have a particle diameter (D50) of 0.05*µ*m or more, 0.09*µ*m or more, 0.2*µ*m or more, 0.5*µ*m or more, 0.7*µ*m or more, 1.0*µ*m or more, or 1.2 *µ*m or more, and 1.8*µ*m or less, 1.4*µ*m or less, 1.0*µ*m or less, 0.6*µ*m or less, 0.2*µ*m or less, 0.1 *µ*m or less, 0.08 *µ*m or less, or 0.05 *µ*m or less.

As described above, if a powder of an electrically conductive material having a small particle diameter is used, the coating on the surface of the positive electrode active material can be made more uniformly, and in particular, the inside of the pores contained in the positive electrode active material is coated with an electrically conductive material, and thus the electronic conductivity of the composite for the positive electrode active material can be greatly improved. However, if the particle diameter (D50) of the powder of the electrically conductive material is less than 0.02 *µ*m, it is not preferable because the particles are scattered in the dry mixing process, making it difficult to work. If the particle diameter (D50) of the powder of the electrically conductive material exceeds 2 *µ*m, it is not preferable because it is difficult to insert a powder of a electrically conductive material into the pores of the positive electrode active material.

The particle diameter (D50) of the powder of the electrically conductive material is smaller than the pore size of the particles of the positive electrode active material. In addition, it is more preferable if the ratio of the particle diameter (D50) of the powder of the electrically conductive material and the pore size of the particles of the positive electrode active material is 1: 20 to 1: 3, more preferably 1: 15 to 1: 5. If these conditions are satisfied, it is preferable because the powder of the electrically conductive material can easily penetrate into the pores of the positive electrode active material, and thus can smoothly coat the pore walls, the pore bottom, and the like.

In one embodiment of the present invention, the ratio of the particle diameter (D50) of the powder of the electrically conductive material and the particle diameter of the solid electrolyte may be 1: 200 to 1: 10, more preferably 1: 160 to 1: 50.

In the present invention, the particle diameter of the positive electrode active material, the particle diameter of the solid electrolyte, and the particle diameter of the electrically conductive material may be measured using Mastersizer 3000 (manufactured by Malvern company), which is a wet particle size measuring device by laser light scattering method.

In addition, the pore size of the positive electrode active material can be measured using an FE-SEM device, specifically, it can be measured using a JSM-7200F device (manufactured by JEOL company).

In one embodiment of the present invention, the weight ratio of the electrically conductive material and the solid electrolyte contained in the coating composition may be 0.2: 9.8 to 6: 4, preferably 0.7: 9.3 to 3: 7, more preferably 0.8: 9.2 to 1.5: 8.5.

If the weight ratio of the electrically conductive material is less than the above range, the electrical conductivity of the composite for positive electrode active material may be lowered. If the weight ratio of the electrically conductive material exceeds the above range, it is not preferable because the electrical conductivity is improved, but the content of other components is reduced.

In addition, if the weight ratio of the solid electrolyte is less than the above range, the ion conductivity of the composite for the positive electrode active material may be reduced. If the weight ratio of the solid electrolyte exceeds the above range, it is not preferable because the ion conductivity is improved, but the content of other components is reduced.

In one embodiment of the present invention, the combined weight of the electrically conductive material and the solid electrolyte used in the coating of the positive electrode active material may be 2 to 50 parts by weight, preferably 3 to 20 parts by weight, and more preferably 5 to 15 parts by weight relative to 100 parts by weight of the composite for the positive electrode active material.

The combined weight of the electrically conductive material and the solid electrolyte is less than the above range, the electrical conductivity and ion conductivity of the composite for the positive electrode active material may be lowered. If the combined weight exceeds the above range, it is not preferable because the electrical conductivity and ion conductivity may be improved, but the content of the positive electrode active material may be reduced, and thus the capacity of the electrode may be reduced.

In one embodiment of the present invention, the positive electrode active material may have a particle diameter (D50) of 3 *µ*m to 30 *µ*m. If the particle diameter (D50) is less than the above range, it is not preferable because the coating of the solid electrolyte and electrically conductive material may be non-uniformly formed, and it is difficult for the solid electrolyte and/or the electrically conductive material to penetrate into the pores of the active material. If the particle diameter (D50) exceeds the above range, it is not preferable because the coating property is improved, but the active material is broken by friction in the secondary high shear mixing process and thus may cause side reactions.

In one embodiment of the present invention, the positive electrode active material may be at least one selected from the group consisting of NCM, LFP, LMO, LCO, etc., and specifically may be any one active material particle selected from the group consisting of LiCoO₂, LiNiO₂, LiMn₂O₄, LiCoPO₄, LiFePO₄ and LiNi_{1-x-y-z}CoₓM1_{y}M2_{z}O₂ (wherein M1 and M2 are, independently of each other, any one selected from the group consisting of Al, Ni, Co, Fe, Mn, V, Cr, Ti, W, Ta, Mg and Mo, and x, y and z are, independently of each other, the atomic fractions of the elements constituting the oxide, and 0≤x<0.5, 0≤y<0.5, 0≤z<0.5, 0<x+y+z≤1) or a mixture of two or more thereof. However, the positive electrode active material is not limited thereto.

The positive electrode active material may be contained in an amount of 50 to 98% by weight based on 100 parts by weight of the composite for the positive electrode active material.

In one embodiment of the present invention, the powder of the solid electrolyte may be a powder of the solid electrolyte exemplified below. The solid electrolyte comprises a solid electrolyte material having ion conductivity, and may comprise a solid polymer electrolyte, an inorganic solid electrolyte, or a mixture of both. The solid electrolyte preferably exhibits ion conductivity of 10⁻⁷ s/cm or more.

In one embodiment of the present invention, the solid polymer electrolyte may be a solid polymer electrolyte formed by adding a polymer resin to a solvated lithium salt, or a polymer gel electrolyte formed by containing an organic electrolyte solution containing an organic solvent and a lithium salt in a polymer resin.

The solid polymer electrolyte may include, for example, one selected from the group consisting of polyether-based polymer, polycarbonate-based polymer, acrylate-based polymer, polysiloxane-based polymer, phosphazene-based polymer, polyethylene derivative, alkylene oxide derivative, phosphoric acid ester polymer, poly agitation lysine, polyester sulfide, polyvinyl alcohol, polyvinylidene fluoride and a polymer containing an ionic dissociation group, or a mixture of two or more thereof, but is not limited thereto.

In a specific embodiment of the present invention, the solid polymer electrolyte may comprise one selected from the group consisting of a branched copolymer obtained by copolymerizing an amorphous polymer such as PMMA, polycarbonate, polysiloxane (pdms) and/or phosphazene as a comonomer in a PEO (polyethylene oxide) main chain as a polymer resin, comb-type polymer resin and cross-linked polymer resin, or a mixture of two or more thereof.

Also, in a specific embodiment of the present invention, the polymer gel electrolyte may include an organic electrolyte solution containing a lithium salt and a polymer resin, and the organic electrolyte solution may be contained in an amount of 60 to 400 parts by weight relative to the weight of the polymer resin. The polymer resin applied to the gel electrolyte is not limited to a specific component, but may be, for example, one selected from the group consisting of polyvinyl chloride (PVC)-based, poly(methyl methacrylate) (PMMA)-based, polyacrylonitrile (PAN), polyvinylidene fluoride (PVdF) and poly(vinylidene fluoride-hexafluoropropylene) (PVdFHFP) or a mixture of two or more thereof, but is not limited thereto.

In the electrolyte of the present invention, the aforementioned lithium salt is an ionizable lithium salt and may be expressed as Li⁺X⁻. The anion (X) of the lithium salt is not particularly limited, but may be, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻ etc.

Meanwhile, in a specific embodiment of the present invention, the polymer-based solid electrolyte may further include an additional polymer gel electrolyte. The polymer gel electrolyte has excellent ion conductivity (or 10⁻⁴ s/m or more) and has binding properties, thereby not only providing a function as an electrolyte, but also providing a function of an electrode binder resin that provides a binding force between the electrode active materials and a binding force between the electrode layer and the current collector.

Meanwhile, in the present invention, the inorganic solid electrolyte may comprise a sulfide-based solid electrolyte, an oxide-based solid electrolyte, or both.

In a specific embodiment of the present invention, the sulfide-based solid electrolyte is a component containing a sulfur atom among the electrolyte components and is not particularly limited to specific components, and may be at least one of a crystalline solid electrolyte, an amorphous solid electrolyte (vitreous solid electrolyte), and a glass ceramic solid electrolyte. Specific examples of the sulfide-based solid electrolyte may comprise, but are not limited to, Thio-LISICON-based compounds such as LPS-type sulfide containing sulfur and phosphorus (for example, Li₂S-P₂S₅), Li₄₋ₓGe₁₋ₓPₓS₄ (wherein x is 0.1 to 2, specifically, x is 3/4, 2/3), Li_{10±1}MP₂X₁₂(M=Ge, Si, Sn, Al, X=S, Se), Li_{3.833}Sn_{0.833}As_{0.166}S₄, Li₄SnS₄, Li_{3.25}Ge_{0.25}P_{0.75}S₄, Li₂SP₂S₅, B₂S₃-Li₂S, xLi₂S-(100-x)P₂S₅ (wherein x is 70 to 80), Li₂S-SiS₂-Li₃N, Li₂S-P₂S₅-LiI, Li₂S-SiS₂-LiI, Li₂SB₂S₃⁻LiI, Li₁₀SnP₂S₁₂, and Li_{3.25}Ge_{0.25}P_{0.75}S₄.

In a specific embodiment of the present invention, the oxide-based solid electrolyte may be LLTO-based compound ((La,Li)TiO₃), Li₆La₂CaTa₆O₁₂, Li₆La₂ANb₂O₁₂ (wherein A is Ca and/or Sr), Li₂Nd₃TeSbO₁₂, Li₃BO_{2.5}N_{0.5}, Li₉SiAlO₈, LAGP-based compound (Li₁₊ₓAlₓGe₂₋ₓ(PO₄)₃, wherein 0≤x≤1, 0≤y≤1), LATP-based compound such as Li₂O-Al₂O₃-TiO₂-P₂O₅ (Li₁₊ₓAlₓTi₂₋ₓ(PO₄)₃, wherein 0≤x≤1, 0≤y≤1), Li₁₊ₓTi₂₋ₓAlₓSi_{y}(PO₄)_{3-y}(wherein, 0≤x≤1,0≤y≤1), LiAlₓZr₂₋ₓ(PO₄)₃(wherein, 0≤x≤1, 0≤y≤1), LiTiₓZr₂₋ₓ(PO₄)₃(wherein, 0≤x≤1, 0≤y≤1), LPS-based compound such as Li₂S-P₂S₅, Li_{3.833}Sn_{0.833}As_{0.166}S₄, Li₄SnS₄, Li_{3.25}Ge_{0.25}P_{0. 75}S₄, B₂S₃-Li₂S, xLi₂S-(100-x)P₂S₅(wherein x is 70 ~ 80), Li₂S-SiS₂-Li₃N, Li₂S-P₂S₅-LiI, Li₂S-SiS₂-LiI, Li₂S-B₂S₃-LiI, Li₃N, LISICON, LIPON-based compound (Li_{3+y}PO₄₋ₓNₓ, wherein 0≤x≤1, 0≤y≤1), Thio-LISICON-based compound such as Li_{3.25}Ge_{0.25}P_{0.75}S4, perovskite-based compounds ((La, Li)TiO₃), Nasicon-based compounds such as LiTi₂(PO₄)₃, LLZO-based compounds containing lithium, lanthanum, zirconium and oxygen as components, and may comprise one or more of them. However, the present invention is not particularly limited thereto.

In one embodiment of the present invention, as the solid electrolyte, a sulfide-based solid electrolyte may be preferably used.

In one embodiment of the present invention, the powder of the electrically conductive material is not particularly limited as long as it has conductivity without causing a chemical change in the battery, and for example, may comprise one selected from graphite such as natural graphite or artificial graphite; carbon black such as carbon black, acetylene black, Ketjen black, channel black, furnace black, lamp black, thermal black; graphene; carbon nanotube; carbon fluoride, metal powders such as aluminum and nickel powder; electrically conductive whiskers such as zinc oxide and potassium titanate; electrically conductive metal oxides such as titanium oxide; electrically conductive materials such as polyphenylene derivatives, or a mixture of two or more thereof.

Hereinafter, the composite for the positive electrode active material, the positive electrode for the secondary battery comprising the same, and the manufacture of the secondary battery comprising the same will be described.

### <Preparation of composite for positive electrode active material>

It may be prepared by the steps of dry mixing a positive electrode active material, a powder of an electrically conductive material, and a powder of a solid electrolyte to prepare a mixture (first mixing); and applying a high shear force to the mixture (secondary mixing).

The first mixing may be performed by mixing for 30 seconds to 5 minutes at 4000 to 6000 rpm without a solvent using a blender (e.g., Lab Blender, Waring company).

The secondary mixing may be performed by applying a shear force of 100 to 250N to the first mixture to perform high shear mixing (e.g., NOB-130, Hosokawa micron company) at 2000 to 4000 rpm for 5 to 20 minutes.

A composite for the positive electrode active material formed by coating the powder of the electrically conductive material and the powder of the solid electrolyte on the surface and pores of the positive electrode active material by the above method can be prepared.

The composites for the positive electrode active material prepared as described above may have a particle diameter (D50) of 3.5*µ*m to 40*µ*m, and the composites for the positive electrode active material may be used as they are, or may be used by selecting particles having a particle diameter in a certain range among them. For example, a particle diameter (D50) of 5 *µ*m to 20 *µ*m may be selected and used.

As the blender and high shear mixing device used for the first mixing and the second mixing, those known in the art may be used without limitation.

### <Manufacture of positive electrode for secondary battery>

The positive electrode for the secondary battery of the present invention can be manufactured by pressing the composites for the positive electrode active material prepared above to prepare a free-standing film, and laminating the free-standing film on a current collector. The process of manufacturing the free-standing film by the pressing may be performed using a Two roll mill MR-3 (Inoue company).

As the current collector, a known current collector used in secondary batteries may be used without limitation, and for example, stainless steel, aluminum, nickel, titanium, sintered carbon, copper; stainless steel surface-treated with carbon, nickel, titanium or silver; a non-conductive polymer surface-treated with an electrically conductive material; a non-conductive polymer surface-treated with metal; and a conductive polymer or the like may be used.

Specifically, the positive electrode for the secondary battery can be manufactured comprising the steps of manufacturing a free-standing film by pressing the composites for the positive electrode active material prepared above; and laminating the prepared free-standing film on a current collector. The above steps may be performed by methods known in the art.

In addition, the free-standing film may be prepared by additionally mixing a binder during the preparation of the free-standing film.

In addition, it is also possible to further add an electrically conductive material and a solid electrolyte in the production of the free-standing film.

Furthermore, the positive electrode for the secondary battery of the present invention can also be manufactured by preparing a wet coating composition from the corresponding components in addition to the method of preparing a free-standing film by the dry process as described above and coating it on the current collector.

In the above, the free-standing film may include 80 to 90% by weight of the composites for the positive electrode active material, 0 to 10% by weight of the electrically conductive material, and 0 to 15% by weight of the solid electrolyte with respect to the total weight. Further, when a binder is contained, the binder may be contained in an amount exceeding 0 to 5% by weight.

In the above, the electrically conductive material and the solid electrolyte may be the same as described above.

The binder is not particularly limited as long as it is a component that assists in bonding the composite for the positive electrode active material and the electrically conductive material and bonding to the current collector, and for example, polytetrafluoroethylene (PTFE), polyvinylidene fluoride (PVDF), polyethylene oxide (PEO), H-NBR, polyvinylidene fluoride polyvinyl alcohol, carboxymethylcellulose (CMC), starch, hydroxypropyl cellulose, regenerated cellulose, polyvinyl pyrrolidone, tetrafluoroethylene, polyethylene, polypropylene, ethylenepropylene-diene monomer (EPDM), sulfonated-EPDM, styrenebutadiene rubber (SBR), fluorine rubber, or various copolymers, etc. may be used.

### <Manufacture of secondary battery>

In the present invention, the secondary battery means any type of secondary battery including the composites for the positive electrode active material. An example of the secondary battery may be a lithium secondary battery, and in particular, since the composite for the positive electrode active material can be preferably applied to an all-solid-state battery, the secondary battery comprises an all-solid-state battery.

Hereinafter, the manufacturing of the all-solid-state battery will be exemplarily described.

The all-solid battery includes a positive electrode, a negative electrode, and a solid electrolyte membrane interposed between the positive electrode and the negative electrode, wherein the positive electrode is the electrode according to the present invention, and has the above-described configurational features.

As the solid electrolyte membrane, any one known in the art may be used without limitation, and, for example, it may be prepared with the above-described solid electrolyte. In addition, the solid electrolyte membrane may be in a form that further comprises a known separator.

The negative electrode may include, for example, a current collector and a negative electrode active material layer formed on at least one side of the current collector. As the negative electrode, any negative electrode known in the art may be used.

Specifically, the negative electrode active material layer may comprise a negative electrode active material, a solid electrolyte and an electrically conductive material. In addition, the negative electrode active material layer may further comprise a binder material.

The negative electrode active material may be any one active material selected from the group consisting of carbonaceous materials such as natural graphite or artificial graphite(mesophase carbon microbeads(MCMB), pyrolytic carbon, mesophase pitch based carbon fiber, liquid crystal pitches (mesophase pitches), petroleum and coal-based coke (petroleum or coal tar pitch derived cokes), etc.); lithium-containing titanium composite oxide (LTO), Si, Sn, Li, Zn, Mg, Cd, Ce, Ni, or Fe metals (Me); alloys composed of the above metals (Me); oxide (MeOₓ, for example, SIO) of the above metals (Me); and a composite of the above metals (Me) and carbon, or a mixture of two or more thereof.

The electrically conductive material, the solid electrolyte, and the binder may be the same as those described above.

For parts not described above, with respect to the construction and manufacturing method of the secondary battery of the present invention, configurations and manufacturing methods known in the art may be applied without limitation.

Hereinafter, examples will be given to describe the present invention in detail. However, the embodiment according to the present invention may be modified in various other forms, and the scope of the present invention should not be construed as being limited to the examples described below. Examples of the present invention are provided in order to more completely explain the present invention to those of ordinary skill in the art.

### Example 1-1: Preparation of composite for positive

### electrode active material

80 g of NCM powder, which is a particle of positive electrode active material with pores having a pore diameter of 0.5 *µ*m, 9.7 g of Li₂S-P₂S₅ powder having a particle diameter (D50) of 0.4 *µ*m, and 0.3 g of ECP600JD powder (Lion company) having a particle diameter (D50) of 0.034 *µ*m were mixed at 5000 rpm for 1 minute without a solvent using Lab Blender (Waring company) as a blender (first mixing). Next, a shear force of 150N was applied to the mixture and thus high shear mixing (by using NOB-130, Hosokawa micron company) was performed at 3000 rpm for 10 minutes (secondary mixing) to prepare a composite for a positive electrode active material having a particle diameter (D50) of 6.2*µ*m, in which a coating layer is formed on the pores and the surface of the positive electrode active material.

### Examples 2-1 to 6-1 and Comparative Examples 1-1 to 9-1: Preparation of composite for positive electrode active material

Composites for positive electrode active material were prepared in the same way as in Example 1 by using each component listed in Table 1 below.

### Comparative Example 10-1: Preparation of wet composite for positive electrode active material

80 g of NCM powder, which is a particle of positive electrode active material with pores having a pore diameter of 0.5 *µ*m, 9 g of Li₂S-P₂S₅ powder having a particle diameter (D50) of 0.4 *µ*m, 1 g of ECP600JD powder (Lion company) having a particle diameter (D50) of 0.034 *µ*m and 200 ml of ethanol were mixed at 500 rpm for 20 minutes using a planetary mixer, HIVIS 2P-03 (manufactured by Primix company). Next, the solvent was dried using a rotary evaporator R-300 (manufactured by BUCHI company) equipment to prepare a composite for a positive electrode active material.

**Table 1:**

| | | Specification of positive electrode active material | | Particle diameter of solid electrolyte (D50) / content | Particle diameter of electrically conductive material (D50) / content | Weight ratio of electrically conductive material:solid electrolyte |
|---|---|---|---|---|---|---|
| | | Particle diameter (D50) / content | Pore diameter | | | |
| Example 1-1 | size (*µ*m) | 5.4 | 0.5 | 0.4 | 0.034 | 0.3: 9.7 |
| | content (g) | 80 | - | 9.7 | 0.3 | |
| Example 2-1 | size (*µ*m) | 5.4 | 0.5 | 0.4 | 0.034 | 6: 4 |
| | content (g) | 80 | - | 4 | 6 | |
| Example 3-1 | size (*µ*m) | 5.4 | 0.5 | 0.4 | 0.034 | 1: 9 |
| | content (g) | 80 | - | 2.7 | 0.3 | |
| Example 4-1 | size (*µ*m) | 5.4 | 0.5 | 0.4 | 0.034 | 1: 9 |
| | content (g) | 80 | - | 9 | 1 | |
| Example 5-1 | size (*µ*m) | 5.4 | 0.5 | 0.4 | 0.034 | 1: 9 |
| | content (g) | 50 | - | 36 | 4 | |
| Example 6-1 | size (*µ*m) | 5.4 | 0.5 | 0.2 | 0.034 | 1: 9 |
| | content (g) | 80 | - | 9 | 1 | |
| Comparative Example 1-1 | size (*µ*m) | 5.4 | 0.5 | 4.2 | 0.034 | 1: 9 |
| | content (g) | 80 | - | 9 | 1 | |
| Comparative Example 2-1 | size (*µ*m) | 5.4 | 0.5 | 0.1 | 0.034 | 1: 9 |
| | content (g) | 80 | - | 9 | 1 | |
| Comparative Example 3-1 | size (*µ*m) | 5.4 | 0.5 | 0.4 | - | 0: 10 |
| | content (g) | 80 | - | 10 | 0 | |
| Comparative Example 4-1 | size (*µ*m) | 5.4 | 0.5 | - | 0.034 | 10: 0 |
| | content (g) | 80 | - | 0 | 10 | |
| Comparative Example 5-1 | size (*µ*m) | 5.4 | 0.5 | 0.4 | 0.034 | 0.1: 9.9 |
| | content (g) | 80 | - | 9.9 | 0.1 | |
| Comparative Example 6-1 | size (*µ*m) | 5.4 | 0.5 | 0.4 | 0.034 | 7: 3 |
| | content (g) | 80 | - | 3 | 7 | |
| Comparative Example 7-1 | size (*µ*m) | 5.4 | 0.5 | 0.4 | 0.034 | 1: 9 |
| | content (g) | 89 | - | 0.9 | 0.1 | |
| Comparative Example 8-1 | size (*µ*m) | 5.4 | 0.5 | 0.4 | 0.034 | 1: 9 |
| | content (g) | 40 | - | 45 | 5 | |
| Comparative Example 9-1 | size (*µ*m) | 5.4 | 0.5 | 0.4 | 0.7 | 1: 9 |
| | content (g) | 80 | - | 9 | 1 | |
| Comparative Example 10-1 | size (*µ*m) | 5.4 | 0.5 | 0.4 | 0.034 | 1: 9 |
| | content (g) | 80 | - | 9 | 1 | |

### Examples 1-2 to 6-2 and Comparative Examples 1-2 to 10-2: Manufacture of positive electrode

90% by weight of the composites for the positive electrode active material prepared in Examples 1-1 to 6-1 and Comparative Examples 1-1 to 10-1, 5% by weight of Li₂S-P₂S₅, 2% by weight of carbon black powder, and 3% by weight of PTFE as a binder were mixed at 5000rpm for 1 minute without a solvent using Lab Blender (Waring company) as a blender (first mixing). Next, by applying a shear force of 100N to the mixture, high shear mixing (using PBV-0.1L, Irie Shokai company) was performed (secondary mixing) to prepare a dough. Next, the dough was used to prepare a free-standing film by Two roll mill MR-3 (Inoue company). Thereafter, the free-standing film was placed on one side of an aluminum current collector having a thickness of 15 *µ*m and pressed to prepare positive electrodes of Examples 1-2 to 6-2 and Comparative Examples 1-2 to 10-2, respectively.

### Examples 1-3 to 6-3 and Comparative Examples 1-3 to 10-3: Manufacture of all-solid-state battery

Lithium metal was used as a counter electrode, each of the positive electrodes prepared in Examples 1-2 to 6-2 and Comparative Examples 1-2 to 10-2 was used, and a solid electrolyte membrane (50 *µ*m, Li₂S-P₂S₅) was interposed between the electrodes to prepare jig cells of Examples 1-3 to 6-3 and Comparative Examples 1-3 to 10-3, each having a capacity of 5 mAh/cm².

### Experimental Example 1: Evaluation of initial discharging efficiency and capacity retention rate of all-solid-state battery

After applying an operating pressure of 3 MPa to each of the solid-state batteries prepared in Examples 1-3 to 6-3 and Comparative Examples 1-3 to 10-3, and charging and discharging twice at 0.05C/0.05C at room temperature, the first discharging capacity was measured as the initial discharging capacity. Thereafter, the high-rate discharge capacity was measured by charging and discharging at 0.1C/0.1C, and charging and discharging at 0.1C/0.5C. The test results are shown in Table 2.

**Table 2:**

| | Initial discharging capacity (mAh/g) 1^{st} 0.05C/0.05C | High-rate discharging capacity (mAh/g) | |
|---|---|---|---|
| | | 0.1C | 0.5C |
| Example 1-3 | 199 | 187 | 163 |
| Example 2-3 | 200 | 191 | 162 |
| Example 3-3 | 197 | 191 | 171 |
| Example 4-3 | 202 | 199 | 175 |
| Example 5-3 | 198 | 190 | 165 |
| Example 6-3 | 202 | 200 | 180 |
| Comparative Example 1-3 | 177 | 152 | 123 |
| Comparative Example 2-3 | 170 | 145 | 107 |
| Comparative Example 3-3 | 164 | 136 | 61 |
| Comparative Example 4-3 | 135 | 113 | 38 |
| Comparative Example 5-3 | 172 | 160 | 99 |
| Comparative Example 6-3 | 160 | 129 | 88 |
| Comparative Example 7-3 | 167 | 143 | 103 |
| Comparative Example 8-3 | 194 | 131 | 71 |
| Comparative Example 9-3 | 150 | 120 | 41 |
| Comparative Example 10-3 | 140 | 68 | 21 |

From the results of Table 2 above, it can be seen that if the particle diameter (D50) of the powder of the solid electrolyte used in the preparation of the composite for the positive electrode active material is out of the range of 0.2*µ*m to 2*µ*m (composite of Comparative Examples 1-1 and 2-1), the initial discharge capacity and high rate discharge capacity of the all-solid-state batteries (Comparative Examples 1-3 and 2-3) using the same are significantly reduced. On the other hand, it can be seen that if the particle diameter (D50) of the powder of the solid electrolyte used in the preparation of the composite for the positive electrode active material meets the above range (composites of Examples 1-1 to 6-1), the initial discharging capacity and high-rate discharging capacity of all-solid-state batteries (Examples 1-3 to 6-3) using the same are remarkably improved.

Meanwhile, it can be seen that when preparing the composite for the positive electrode active material, if the weight ratio of the electrically conductive material and the solid electrolyte used in the coating of the active material satisfies the range of 0.2: 9.8 to 6: 4 (composites of Examples 1-1 to 6-1), the initial discharging capacity and high-rate discharging capacity of all-solid-state batteries (Examples 1-3 to 6-3) using the same are remarkably improved. On the other hand, it can be seen that if the weight ratio of the electrically conductive material and the solid electrolyte is out of the above range (composites of Comparative Examples 3-1 to 6-1), the initial discharging capacity and high rate discharging capacity of the all-solid-state batteries (Comparative Examples 3-3 to 6-3) using the same are significantly reduced.

In addition, it can be seen that if the combined weight of the electrically conductive material and the solid electrolyte used for coating the active material meets the range of 2 to 50 parts by weight compared to 100 parts by weight of the composite for the positive electrode active material (composites of Example 1-1 to 6-1), the initial discharging capacity and high-rate discharging capacity of all-solid-state batteries (Examples 1-3 to 6-3) using the same are remarkably improved. On the other hand, it can be seen that if the combined weight of the electrically conductive material and the solid electrolyte used in the coating of the active material is out of the above range (composites of Comparative Examples 7-1 to 8-1), the initial discharging capacity and the high-rate discharging capacity of the all-solid-state batteries (Comparative Examples 7-3 to 8-3) using the same are significantly reduced.

In addition, it can be seen that in the case of the all-solid-state battery (Comparative Example 10-3) manufactured using the composite for the positive electrode active material manufactured by wet coating (Comparative Example 10-1), the initial discharging capacity and the high rate discharging capacity are significantly reduced compared to the positive electrode active material prepared by dry coating. This result is considered to be the effect of not forming a coating layer, in which a solid electrolyte and an electrically conductive material are uniformly mixed, on the surface of the active material, due to the occurrence of phase separation of the solid electrolyte and electrically conductive material during wet coating.

## Claims

1. A composite for a positive electrode active material, comprising:
a positive electrode active material; and
a coating layer formed on the inside of the pores and on the surface of the positive electrode active material;
wherein the coating layer is formed of a coating composition containing a powder of an electrically conductive material having a particle diameter (D50) of 0.02 *µ*m to 2 *µ*m as measured by laser light scattering and a powder of a solid electrolyte having a particle diameter (D50) of 0.3 *µ*m to 2 *µ*m as measured by laser light scattering,
wherein the positive electrode active material contains pores having a diameter of 0.5 *µ*m to 3 *µ*m as measured by FE-SEM, and
wherein in the coating composition, the powder of the electrically conductive material has the particle diameter (D50) smaller than the pore diameter of the positive electrode active material and the powder of the solid electrolyte has the particle diameter (D50) smaller than the pore diameter of the particles of the positive electrode active material.

2. The composite for the positive electrode active material according to claim 1, wherein the coating layer is a coating layer by dry coating. scattering.

3. The composite for the positive electrode active material according to claim 1, wherein the weight ratio of the electrically conductive material and the solid electrolyte contained in the coating composition is 0.2: 9.8 to 6: 4.

4. The composite for the positive electrode active material according to claim 1, wherein the combined weight of the electrically conductive material and the solid electrolyte used for the coating of the positive electrode active material is 2 to 50 parts by weight relative to 100 parts by weight of the composite for the positive electrode active material.

5. The composite for the positive electrode active material according to claim 1, wherein the positive electrode active material is specifically at least one selected from the group consisting of LiCoO₂, LiNiO₂, LiMn₂O₄, LiCoPO₄, LiFePO₄ and LiNi_{1-x-y-z}CoₓM1_{y}M2_{z}O₂ (wherein M1 and M2 are, independently of each other, any one selected from the group consisting of Al, Ni, Co, Fe, Mn, V, Cr, Ti, W, Ta, Mg and Mo, and x, y and z are, independently of each other, the atomic fractions of the elements constituting the oxide, and 0≤x<0.5, 0≤y<0.5, 0≤z<0.5, 0<x+y+z≤1).

6. The composite for the positive electrode active material according to claim 1, wherein the powder of the solid electrolyte is a powder of a sulfide-based solid electrolyte.

7. A positive electrode for a secondary battery comprising the composite for the positive electrode active material of any one of claims 1 to 7.

8. The positive electrode for the secondary battery according to claim 8, wherein the positive electrode further comprises an electrically conductive material and a solid electrolyte.

9. The positive electrode for the secondary battery according to claim 9, wherein the positive electrode further comprises a binder.

10. A secondary battery comprising the positive electrode of claim 8, a negative electrode, and a solid electrolyte.

## Patentansprüche

1. Verbundstoff für ein Positivelektrodenaktivmaterial, umfassend:
ein Positivelektrodenaktivmaterial; und
eine Beschichtungsschicht, die auf der Innenseite der Poren und auf der Oberfläche des Positivelektrodenaktivmaterials gebildet ist;
wobei die Beschichtungsschicht aus einer Beschichtungszusammensetzung gebildet ist, die ein Pulver eines elektrisch leitfähigen Materials mit einem Partikeldurchmesser (D50) von 0,02 *µ*m bis 2 *µ*m, wie durch Laserlichtstreuung gemessen, und ein Pulver eines Festelektrolyten mit einem Partikeldurchmesser (D50) von 0,3 *µ*m bis 2 *µ*m, wie durch Laserlichtstreuung gemessen, enthält,
wobei das Positivelektrodenaktivmaterial Poren mit einem Durchmesser von 0,5 *µ*m bis 3 *µ*m, wie durch FE-SEM gemessen, enthält, und
wobei in der Beschichtungszusammensetzung das Pulver des elektrisch leitfähigen Materials einen Partikeldurchmesser (D50) kleiner als der Porendurchmesser des Positivelektrodenaktivmaterials aufweist und das Pulver des Festelektrolyten einen Partikeldurchmesser (D50) kleiner als der Porendurchmesser der Partikel des Positivelektrodenaktivmaterials aufweist.

2. Verbundstoff für das Positivelektrodenaktivmaterial nach Anspruch 1, bei dem die Beschichtungsschicht eine Beschichtungsschicht durch Trockenbeschichtung ist.

3. Verbundstoff für das Positivelektrodenaktivmaterial nach Anspruch 1, bei dem das Gewichtsverhältnis des elektrisch leitfähigen Materials und des Festelektrolyten, die in der Beschichtungszusammensetzung enthalten sind, 0,2:9,8 bis 6:4 beträgt.

4. Verbundstoff für das Positivelektrodenaktivmaterial nach Anspruch 1, bei dem das kombinierte Gewicht des elektrisch leitfähigen Materials und des Festelektrolyten, die für die Beschichtung des Positivelektrodenaktivmaterials verwendet werden, 2 bis 50 Gewichtsteile relativ zu 100 Gewichtsteilen des Verbundstoffs für das Positivelektrodenaktivmaterial beträgt.

5. Verbundstoff für das Positivelektrodenaktivmaterial nach Anspruch 1, bei dem das Positivelektrodenaktivmaterial spezifisch wenigstens eines ist, das aus der Gruppe ausgewählt ist, die aus LiCoO₂, LiNiO₂, LiMn₂O₄, LiCoPO₄, LiFePO₄ und LiNi_{1-x-y-z}CoₓM1_{y}M2_{z}O₂ besteht (wobei M1 und M2 unabhängig voneinander irgendeines sind, das aus der Gruppe ausgewählt ist, die aus Al, Ni, Co, Fe, Mn, V, Cr, Ti, W, Ta, Mg und Mo besteht, und x, y und z unabhängig voneinander die atomaren Anteile der Elemente sind, die das Oxid bilden, und 0≤x<0,5, 0≤y<0,5, 0≤z<0,5, 0<x+y+z≤1 gilt).

6. Verbundstoff für das Positivelektrodenaktivmaterial nach Anspruch 1, bei dem das Pulver des Festelektrolyten ein Pulver eines Festelektrolyten auf Basis von Sulfid ist.

7. Positivelektrode für eine Sekundärbatterie, umfassend den Verbundstoff für das Positivelektrodenaktivmaterial nach einem der Ansprüche 1 bis 7.

8. Positivelektrode für die Sekundärbatterie nach Anspruch 8, bei der die Positivelektrode ferner ein elektrisch leitfähiges Material und einen Festelektrolyten umfasst.

9. Positivelektrode für die Sekundärbatterie nach Anspruch 9, bei der die Positivelektrode ferner ein Bindemittel umfasst.

10. Sekundärbatterie umfassend die Positivelektrode nach Anspruch 8, eine Negativelektrode und einen Festelektrolyten.

## Revendications

1. Composite pour un matériau actif d'électrode positive, comprenant :
un matériau actif d'électrode positive ; et
une couche de revêtement réalisée sur l'intérieur des pores et sur la surface du matériau actif d'électrode positive ;
la couche de revêtement étant constituée d'une composition de revêtement contenant une poudre d'un matériau électro-conducteur dont la granulométrie (D50), mesurée par diffusion de lumière laser, est comprise entre 0,02 µm et 2 µm, et un électrolyte solide, dont la granulométrie (D50), mesurée par diffusion de lumière laser, est comprise entre 0,3 µm et 2 µm,
le matériau actif d'électrode positive contenant des pores ayant un diamètre mesurant de 0,5 µm à 3 µm, mesuré par FE-SEM, et
dans la composition du revêtement, la granulométrie (D50) de la poudre du matériau électro-conducteur est inférieure au diamètre de pore du matériau actif d'électrode positive, et la granulométrie (D50) de la poudre d'électrolyte solide est inférieure au diamètre de pore des particules du matériau actif d'électrode positive.

2. Composite pour le matériau actif d'électrode positive selon la revendication 1, la couche de revêtement étant une couche de revêtement par revêtement à sec.

3. Composite pour le matériau actif d'électrode positive selon la revendication 1, le rapport pondéral du matériau électro-conducteur et de l'électrolyte solide contenu dans la composition du revêtement étant compris entre 0,2 / 9,8 et 6 / 4.

4. Composite pour le matériau actif d'électrode positive selon la revendication 1, le poids combiné du matériau électro-conducteur et de l'électrolyte solide utilisés pour le revêtement du matériau actif d'électrode positive allant de 2 à 50 parties en poids relativement à 100 parties en poids du composite pour le matériau actif d'électrode positive.

5. Composite pour le matériau actif d'électrode positive selon la revendication 1, le matériau actif d'électrode positive étant spécifiquement au moins un matériau sélectionné dans le groupe composé de LiCoO₂, LiNiO₂, LiMn₂O₄, LiCoPO₄, LiFePO₄ and LiNi_{1-x-y-z}CoₓM1_{y}M2_{z}O₂ (M1 and M2 étant, indépendamment l'un de l'autre, un quelconque sélectionné dans le groupe composé de : Al, Ni, Co, Fe, Mn, V, Cr, Ti, W, Ta, Mg et Mo, et x, y and z étant, indépendamment l'un de l'autre, les fractions atomiques des éléments constituant l'oxyde, et 0≤x<0,5, 0≤y<0,5, 0≤z<0,5, 0<x+y+z≤1).

6. Composite pour le matériau actif d'électrode positive selon la revendication 1, la poudre de l'électrolyte solide étant une poudre d'un électrolyte solide à base de sulfure.

7. Électrode positive pour une batterie secondaire comprenant le composite pour le matériau actif d'électrode positive selon une quelconque des revendications 1 à 7.

8. Électrode positive pour la batterie secondaire selon la revendication 8, l'électrode positive comprenant en outre un matériau électro-conducteur et un électrolyte solide.

9. Électrode positive pour la batterie secondaire selon la revendication 9, l'électrode positive comprenant en outre un liant.

10. Batterie secondaire comprenant l'électrode positive selon la revendication 8, une électrode négative, et un électrolyte solide.
